# EUROPEAN PATENT SPECIFICATION

(11) **EP 1 793 684 B1**
(45) Date of publication and mention of the grant of the patent: **27.08.2008**
(21) Application number: 04740550.1
(22) Date of filing: 02.07.2004
(51) Int. Cl.: A23B 7/00

(54) **PROCESS FOR PRESERVING FRESH PRODUCE AND COATING COMPOSITION THEREFOR**
VERFAHREN ZUR KONSERVIERUNG VON FRISCHEN PRODUKTE UND DAFÜR GEEIGNETE ÜBERZUGSMISCHUNG
PROCESSUS DE CONSERVATION DE PRODUIT FRAIS ET COMPOSITION DE REVETEMENT A CET EFFET

(43) Date of publication of application: 13.06.2007
(73) Proprietor: BASF CORPORATION, Florham Park, NJ 07932 (US); BASF SE, 67056 Ludwigshafen (DE)
(72) Inventor: PETCAVICH, Robert, J., San Diego, CA 92130 (US)
(74) Representative: Köster, Reinhold
(86) International application number: PCT/EP2004/007187
(87) International publication number: WO 2006/002671

(56) References cited:
- US-A- 5 374 627
- US-A1- 2003 203 084
- BEGIN A ET AL: "ANTIMICROBIAL FILMS PRODUCED FROM CHITOSAN" INTERNATIONAL JOURNAL OF BIOLOGICAL MACROMOLECULES, BUTTERWORTH & CO., GUILDFORD, GB, vol. 26, no. 1, 1999, pages 63-67, XP000971972 ISSN: 0141-8130
- JUMAA M ET AL: "A new lipid emulsion formulation with high antimicrobial efficacy using chitosan" EUROPEAN JOURNAL OF PHARMACEUTICS AND BIOPHARMACEUTICS, ELSEVIER SCIENCE PUBLISHERS B.V., AMSTERDAM, NL, vol. 53, no. 1, January 2002 (2002-01), pages 115-123, XP004331338 ISSN: 0939-6411

## Description

### FIELD OF THE INVENTION

The present invention relates generally to the field of preservation of fresh produce and more particularly to an edible composition for and a process for preserving fresh produce.

### BACKGROUND OF THE INVENTION

Current techniques for the preservation of fresh produce consist of temperature and/or pressure treatment or control, wax and similar coating techniques, synthetic polymer coating techniques, and polymer packaging.

Various coating compositions have been proposed, e.g., a petroleum solvent solution of a waxy film former and a fungicide (U.S. Pat. No. 4,006,259), a mixture lard, tallow and lecithin applied in molten state (U.S. Pat. No. 4,207, 347), hydrogenated jojoba oil (U.S. Pat. No. 4,356,197), a salt of carboxylic acid and an alkyl amine (U.S. Pat. No. 4,532,156), a 3% oil-in-water emulsion of hydrogenated vegetable oil, stearic acid and an anionic emulsifier (U.S. Pat. No. 4,649,057), the combination of a food acid, an edible reducing agent and a carbohydrate thickener followed by freezing (U.S. Pat. No. 4,751,091), a denatured proteinaceous solution soybeans, wheat and com (U.S. Pat. No. 5,128,159), simultaneously scrubbing and drenching with a liquid containing a fungicide (U.S. Pat. No. 5,148,738), a slurry consisting of by-products of the produce and certain sugars and acids (U.S. Pat. No 5,364,648), a mixture of a polysaccharide polymer, a preservative, an acidulent and emulsifiers (U.S. Pat- No. 5,198,254), and a light-activated composition (U.S. Pat. No. 5,489,442).

Some Russian and Japanese publications have proposed the use of polyvin) alcohol as a gas barrier coating for produce, but few if any of these suggestions har found their way into the commercial market.

Various forms of produce packaging are disclosed, by way of example, in I Pat. Nos. 4,769,262; 5,030,510; 5,093,080; 5,160,768; 5,427,807; 5,547,693; and 5,575,418.

In the case of bananas, to which the present invention has particular application, the bananas are harvested in a green, unripened state, washed to remove field debris, and refrigerated for shipment via "reefer boats" (refrigerated vessels) to point of distribution. At destination, the green bananas are transferred to cold storage warehouses where they remain until transferred to temperature controlled ripening rooms. In the ripening rooms, the bananas are exposed to ethylene gas to trigger the ripening process. Once triggered, the ripening process cannot be halted and the bananas must be delivered in real time to retail outlets for sale before the bananas become overripe, discolored and unsalable. Green tomatoes are treated in a similar fashion.

Coating the produce with a solvent solution of natural wax products will extend their storage life, but the solvent for the wax can be both expensive and environmentally hazardous. Consequently, wax coatings have not met with widespread acceptance.

A synthetic polymer coating for bananas, available under the brand name "SEMPERFRESH", is based an sucrose esters of fatty acids. The bananas are coated by dipping in a dilute suspension of the SEMPERFRESH product and allowed to dry, which results in a thin, invisible coating an the surface of the peel. In a study of the effect of SEMPERFRESH coatings an the preservation of bananas transported under refrigerated conditions and stored under non-refrigerated conditions, ripening was found to be delayed without adverse effect an flavor. However, the coating only allowed storage of bananas at ambient temperatures for about 10 days.

Enclosing bananas in polyethylene bags is also effective. The thickness and porosity of the packaging must be appropriate to the physiological reactions of the fruit. This results in the creation of a modified atmosphere that slows water loss and respiratory exchange, but also induces undesirable symptoms due to asphyxia. Here again, the use of polyethylene bags allows storage of bananas at ambient temperatures for only a few days.

The compositions for preserving fresh produce developed heretofore have been usable only for produce having a peel or rind. Thus, there is a need to develop compositions for preservation of produce that does not have a peel or ring which is typically removed before consumption.

### SUMMARY OF THE INVENTION

The present invention provides an edible coating composition for preservation of fresh produce and a process for using same. The coating composition comprises chitosan or a derivative thereof, an organic acid and a surfactant. The composition i useful for prolonging the maturation and ripening process and to increase the permissible storage time between harvest and consumption.

An object of the invention is to provide an improved and economical process: for preserving fresh produce.
Another object is to provide a process for preserving fresh produce that prolongs the period during which the produce may be stored at ambient temperature without critical deterioration of the produce.

Another object is to provide a process for preserving fresh produce that significantly delays maturation and ripening of freshly harvested produce and therefore prolongs the duration of time between harvesting and the state in which the produce is in prime condition for consumption.

Another object of the invention is to provide an edible coating composition the preservation of fresh produce.

Another object of the invention is to provide an edible coating composition that preserves fresh produce at a storage environment with a high relative humidity. In accordance with the objectives of the invention, the improved process resides in application to the exterior surface of fresh produce of an improved coating composition comprising an aqueous solution of from about 0.2 to about 3.0 percent weight of chitosan or modified chitosan; from about: 0.01 to about 1.0 percent by weight of organic acid, preferably acetic acid; from about 0.02 to about 0.1 percent 1 weight of surfactant, preferably dioctyl sodium sulfosuccinate (DSS) or sodium lauryl sulfate (SLS). Optional additional ingredients include plant growth regulators, antimicrobials, plasticizers and antifoaming agents.

These and other objects and advantages of the invention will become apparent to those of reasonable skill in the art from the following detailed description.

### DETAILED DESCRIPTION OF PREFERRED EMBODIMENTS

The following is a detailed description of certain embodiments of the invention which are presently deemed by the inventors to be the best mode of carrying out the invention. Drawings are not deemed necessary inasmuch as the following description will enable any person skilled in the art to make and use the invention.

As above indicated, the invention resides in the discovery that application o specially formulated coating composition to the exterior surface of fresh fruits and vegetables, especially those with an edible skin, significantly delays maturation and ripening of the fruits and vegetables. This in turn prolongs the duration of time between harvest and Optimum conditions for consumption so that more widespread distribution of fresh fruits and vegetables is accommodated. Additionally, the need specialized transportation and storage equipment and conditions, such as refrigeration can in many cases be eliminated or at least alleviated.

Pursuant to the invention, the coating composition is preferably and most easily and economically applied to the exterior surfaces of selected fruits and vegetables by application of a dilute liquid solution which is subsequently permitted to dry.

The solution is preferably aqueous and comprised by weight percent of from about 0.2 to about 3 percent, preferably about 1 percent of chitosan or modified chitosan, from about 0.1 to about 1 percent, preferably about 0.2 percent of acetic acid; and from about 0.02 to about 0.1 percent, preferably 0.06 percent of a surfactant preferably, dioctyl sodium sulfosuccinate (DSS) or sodium lauryl sulfate. (SLS).

As an example, Chitosan, a modified chitosan (from Primex Ingredients As: New York, NY) can be used in the present invention.

Organic acids suitable for the present invention include acetic acid, citric acid, lactic acid, malic acid, propionic acid and succinic acid. In a preferred embodiment, the organic acid is acetic acid.

Optionally, the coating may include one or more of the following: a plant growth regulator, an antimicrobial agent, an antifoaming agent and a plasticizer. Suitable plant growth regulators include, but are not limited to, gibberellic acid, abscissic acid, auzin, cytokinins, polyamines, ethephon and jasmonate. Suitable antimicrobial agents include, but are not limited to, methylparaben, ethylparaben, propylparaben, butylparaben, sodium propionate, calcium propionate, benzoic acid sodium benzoate, potassium sorbate and sodium bisulfite. Suitable antifoaming agents include, but are not limited to, polydimethylsiloxane and other silicone or nonsilicone agents. Suitable plasticizers include Tween and glycerine.

As an example the coating composition may also include any or all of from about 0.005 to about 0.01 percent, preferably about 0.0075 percent of gibberellic acid, from about 0.05 to about 0.5 percent of antimicrobial, preferably 0.1 percent of methylparaben, a small amount of plasticizer, e.g., glycerin and Tween and from about 0.01 to about 0.05 percent, preferably 0.02 percent of an antifoaming agent, such as dimethylpolysiloxane.

The concentration of the constituents in water may range from about 0.4 to about 5 percent by weight, i.e., the dilute solution is comprised of from about 95.4 t about 99.2 percent by, weight of water.

The aqueous solution may be applied to the produce in any suitable or customary manner, e.g., by dipping the produce in a tank or vat of the solution, by spraying the solution onto the produce, or by passing the produce through a downwardly falling curtain or waterfall of the solution.

The surfactant reduces the surface tension of the mixture and facilitates the formation of very uniform and homogeneous coating composition. In addition, it enhances the ability of the composition to uniformly coat and adhere to the produce.

The antimicrobial protects the ripening produce from mold and parasitic infestation. Thus, the antimicrobial is, in most instances, an effective and viable additive.

An antifoaming agent is recommended when produce is being processed commercially. Blending of the constituents of the coating without an agent frequently results in foaming and a consequent delay in the time of usefulness due to the elapse, of time before which the foam dissipates and the blended composition is ready for use. An antifoaming agent reduces foaming and eliminates the delay and is employ primarily as a matter of production expediency.

While not intending to be bound by any particular theory, it is considered that coating with the composition of the present invention limits but does not prevent respiratory exchange, i.e., transmission of oxygen (air) into the produce, transmission of gases, e.g., ethylene and carbon dioxide, out of the produce, and water vapor transmission. This may prolong maturation and ripening process and, in turn, to increase the permissible storage time between harvest and consumption.

An advantage of the present composition is that the conventional requirement for refrigeration may either be eliminated or significantly reduced thus making the composition economical. The cost savings achieved by reduced refrigeration requirements and reduced deterioration losses may cover or exceed the cost of the additional processing required when the ripening process is initiated, as described below.

When the produce is coated by spraying, the solids content or the composition, preferably should not be exceed about 2 percent by weight, and should preferably b below 1.5 percent by weight.

A typical coating formula is given in Table 1

**Table 1**

| | |
|---|---|
| chitosan | 1 % (w/w) |
| acetic acid | 0.2% (w/w) |
| DSS | 0,06% (w/w) |
| gibberellic acid | 0.0075% (w/w) |
| methylparaben | 0.1 % (w/w) |
| polydimethylsiloxane | 0.01 % (w/w) |
| water | 98.62% (w/w) |

The chitosan is the primary constituent for controlling the characteristics of the coating. The acetic acid reduces the water pH to help the chitosan dissolution during the coating preparation. The gibberellic acid is a plant growth regulator which: delays produce senescence during storage. The surfactant reduces the surface tension and the antimicrobial reduces growth of microorganisms.

To prepare the coating composition, the various components are added to heated water. The pH of the aqueous solution is then reduced by adding the organ acid. Chitosan or modified chitosan is then added and the slurry is stirred till chitosan dissolves.

As an example, the coating solution is appropriately prepared by heating ä half amount of total required deionized water and adding the antifoam agent, DSS surfactant and methylparaben under agitation. After DSS and methylparaben are completely dissolved, heating is discontinued. When the temperature of the solution reaches to about 50°C (123°F), gibberellic acid is added under agitation for about 1 minutes. Acetic acid is added to the solution and then chitosan is added immediately. The slurry is stirred for a few hours until chitosan is completely dissolved. The remaining water is added and mixed. The coating is filtrated to remove insoluble matter before packing into containers. The final total soluble solids (TSS) ranges from 2.5 to 2.8 in Brix reflective index, when measured by a refractometer.

In an experimental comparative test of the coating composition of the invention (Example 1), first quality fresh green limes were obtained from a local farm. About 200 limes were used for control and another 2001 imes were sprayed v the coating composition containing 1 % chitosan. All limes were wet-packed in standard carton boxes and stored in a refrigerator at 60°F and 85 - 90% RH for three weeks. After three weeks, all limes were removed from the refrigerator and left at ambient conditions (66°F and 65% RH) for four days. Evaluations for color changes (yellowing) were made at the end of the three-week cold storage and four-day ambient storage. After three weeks, most control limes tuned yellow in color, while the coated limes were almost as green as fresh limes. After 4 days at ambient conditions, almost all control limes tuned yellow in color, while the coated limes only slightly turned yellow in color. The coating composition significantly controlled the lime yellowing for up to 2 weeks at cold storage and up to one week at ambient conditions.

In another comparative test of the coating composition of the invention (Example 2), about two-week old green and firm avocados were obtained from a local fruit distributor (avocados were imported from Chile). Twenty four (24) avocados were used as a control and another 24 avocados were sprayed with the coating composition containing 1 % chitosan. All avocados were wet-packed in carton boxes and stored a refrigerator at 50 - 55°F and 85 - 90% RH. Evaluations for color and firmness changes wore carried out after 21 days and 25 days. After three weeks, all control avocados were soft in texture and the skin turned brown in color, while the coated ones were still firm in texture and the skin color was green with light brown accent After 25 days, the control avocados were very soft in texture and dank brown in cc the control avocados were very soft in texture and dank brown in cc while the coated ones were significantly less soft and less brown than the controls The coating composition delayed the avocado ripening for about one week at the 1 conditions,

In a third comparative test of the coating composition of the invention (Example 3), fresh Hawaiian papayas were obtained from a farm in Hawaii. 4 papa: were used as control and another 4 papayas were sprayed with the coating composition. Controls and the coated papayas were stored in a refrigerator at 50°F and 85 - 90% RH. Evaluations for color and firmness changes were carried out after two weeks and three weeks. After two weeks or three weeks, the coated papayas were significantly less yellow in color and more firmer in texture than the control papaya Also the coated ones had less shriveling than the controls. The coating composition extended the papaya storage life for more than one week at cold storage.

In a fourth comparative test of the coating composition of the invention (Example 4), mature green tomatoes (stage 3, turning stage) were obtained from a local farm. 20 tomatoes were used as control and another 20 tomatoes were coated with the coating composition containing 2% chitosan. All tomatoes were stored at ambient conditions (70°F and 65% RH). Evaluations for color and firmness change were carried out after 4 days and 8 days. After 4 days at ambient, all control tomatoes were fully ripened, the skin color turned to red and the tissue turned soft. However, the coated tomatoes were less ripened than the controls, the skin color and tissue texture were: substantially less red and less soft than the controls. After 8 days at ambient temperature, the controls were over ripened with deep-red skin color and 1 very soft tissue. While the coated ones were fully ripened, but the skin color and tissue texture were significantly less red and less soft than the controls. The coating composition delayed tomato ripening for up to three days at ambient conditions.

Additional fruits and vegetables that are likely candidates for successful practice of the invention include apples, pears, bananas, melons, mangoes, pineapples, plantains and stone fruits.

## Claims

1. A coating composition for fresh produce comprising an aqueous solution of from 0.2 to 3 percent by weight of chitosan or modified chitosan, from 0.1 to 1.0 percent by weight of an organic acid, and from 0.02 to 0.1 percent by weight of a surfactant.

2. The coating composition of claim 1, wherein the organic acid is selected from the group consisting of acetic acid, citric acid, lactic acid, malic acid, propionic acid and succinic acid.

3. The coating composition of claim 1, wherein the surfactant is selected from the group consisting of dioctylsodium sulfosuccinate and sodium lauryl sulfate.

4. The coating composition of claim 1 further comprising from 0.05 to 0.5 percent by weight of an antimicrobial agent.

5. The coating composition of claim 4, wherein the antimicrobial agent is detected from group consisting of methylparaben, ethylparaben, propylparaben, butylparaben, sodium propionate, calcium propionate, benzoic acid, sodium benzoate, potassium sorbate and sodium bisulfite.

6. The coating composition of claim 1 further comprising from 0.01 to 0.05 percent by weight of an antifoaming agent.

7. The coating composition of claim 6, wherein the antifoaming agent is selected from the group consisting of silicone or nonsilicone antifoaming agents.

8. The coating composition of claim 7, wherein the silicone antifoaming agent is polydimethylsiloxane.

9. The coating composition of claim 1 further comprising from 0.005 to 0.01 percent by weight of a plant growth regulator.

10. The coating composition of claim 9, wherein the plant growth regulator is selected from the group consisting of gibberellic acid, abscissic acid, auxin, cytokinins, polyamines, ethephon and jasmonate.

11. A coating composition for fresh produce comprising by weight from 0.2 to 3 percent of chitosan, from 0.1 to 1.0 percent of acetic acid, from 0.02 to 0.1 percent of dioctyl sodium sulfosuccinate, from 0.005 0.01 percent of gibberellic acid, from 0.05 to 0.5 percent of methylparaben and from 0.01 to 0.05 percent of polydimethylsiloxane.

12. The coating composition of claim 11, wherein the composition comprises 1 percent weight of chitosan, 0.2 percent weight of acetic acid, percent weight of dioctyl sodium sulfosuccinate, 0.0075 percent weight of gibberellic acid, percent weight of methylparaben, and 0.01 percent weight of polydimethylsiloxane.

13. A process for preserving fresh produce comprising the step of coating the exterior surface of the produce with the coating composition comprising an aqueo solution of from 0.2 to 3 percent by weight of chitosan or modified chitosan, from 0.1 to 1.0 percent by weight of an organic acid, and from 0.02 to 0.1 percent by weight of a surfactant.

14. The process of claim 13, wherein the organic acid is selected from the group consisting of acetic acid, citric acid, lactic acid, malic acid, propionic acid arid succinic acid.

15. The process of claim 13, wherein the surfactant is selected from the group consisting of dioctyl sodium sulfosuccinate and sodium lauryl sulfate.

16. The process of claim 13, wherein the coating composition further comprises from 0.005 to 0.01 percent by weight of a plant growth regulator.

17. The process of claim 16, wherein the plant growth regulator is selected from group consisting of gibberellic acid, abscissic acid, auxin, cytokinins, polyamines, ethephon and jasmonate.

18. The process of claim 13, wherein the coating composition further comprise from 0.05 to 0.5 percent by weight of an antimicrobial agent.

19. The process of claim 18, wherein the antimicrobial agent is selected from the group consisting of methylparaben, ethylparaben, propylparaben, butylparaben, sodium propionate, calcium propionate, benzoic acid, sodium benzoate, potassium sorbate and sodium bisulfite.

20. The process of claim 13, wherein the coating composition further comprise from 0.01 to 0.05 percent by weight of a antifoaming agent.

21. The process of claim 20, wherein the antifoaming agent is selected from the group consisting of silicone or a nonsilicone antifoaming agents.

22. The process of claim 21, wherein the silicone antifoaming agent is polydimethylsiloxane.

23. A process for preserving fresh produce comprising the step of coating the exterior surface of produce with a composition comprising by weight from 0.2 to 3 percent of chitosan, from 0.1 to 1.0 percent of acetic acid, from 0.02 to 0.1 percent of dioctyl sodium sulfosuccinate, from 0.005 0.01 percent of gibbereilic acid, from 0.05 to 0.5 percent of methylparaben and from 0.01 to 0.05 percent of polydimethylsiloxane.

24. The process of claim 23, wherein the coating composition comprises 3 percent weight of chitosan, 0.2 percent weight of acetic acid, 0.06 per weight of dioctyl sodium sulfosuccinate, 0.0075 percent weight of gibberellic acid, 0.1 percent weight of methylparaben, and 0.01 percent weight of polydimethylsiloxane.

## Patentansprüche

1. Beschichtungszusammensetzung für Frischware, umfassend eine wäßrige Lösung von 0,2 bis 3 Gewichtsprozent Chitosan oder modifiziertes Chitosan, 0,1 bis 1,0 Gewichtsprozent einer organischen Säure und 0,02 bis 0,1 Gewichtsprozent eines Tensids.

2. Beschichtungszusammensetzung nach Anspruch 1, wobei die organische Säure aus der Reihe Essigsäure, Citronensäure, Milchsäure, Äpfelsäure, Propionsäure und Bernsteinsäure -stammt .

3. Beschichtungszusammensetzung nach Anspruch 1, wobei das Tensid aus der Reihe Dioctylnatriumsulfosuccinat und Natriumlaurylsulfat stammt.

4. Beschichtungszusammensetzung nach Anspruch 1, die weiterhin 0,05. bis 0,5 Gewichtsprozent eines antimikrobiellen Mittels umfaßt.

5. Beschichtungszusammensetzung nach Anspruch 4, wobei das antimikrobielle Mittel aus der Reihe Methylparaben, Ethylparaben, Propylparaben, Butylparaben, Natriumpropionat, Calciumpropionat, Benzoesäure, Natriumbenzoat, Kaliumsorbat und Natriumbisulfit stammt.

6. Beschichtungszusammensetzung nach Anspruch 1, die weiterhin 0,01 bis 0,05 Gewichtsprozent eines Schaumhemmers umfaßt.

7. Beschichtungszusammensetzung nach Anspruch 6, wobei der Schaumhemmer aus der Reihe Silikon- oder Nichtsilikon-Schaumhemmer stammt.

8. Beschichtungszusammensetzung nach Anspruch 7, wobei der Silikon-Schaumhemmer Polydimethylsiloxan ist.

9. Beschichtungszusammensetzung nach Anspruch 1, die weiterhin 0,005 bis 0,1 Gewichtsprozent eines Pflanzenwachstumsregulators umfaßt.

10. Beschichtungszusammensetzung nach Anspruch 9, wobei der Pflanzenwachstumsregulator aus der Reihe Gibberellinsäure, Abscisinsäure, Auxin, Cytokinine, Polyamine, Ethephon und Jasmonat stammt.

11. Beschichtungszusammensetzung für Frischware, umfassend - auf das Gewicht bezogen - 0,2 bis 3 Prozent Chitosan, 0,1 bis 1,0 Prozent Essigsäure, 0,02 bis 0,1 Prozent Dioctylnatriumsulfosuccinat, 0,005 bis 0,01 Prozent Gibberellinsäure, 0,05 bis 0,5 Prozent Methylparaben und 0,01 bis 0,05 Prozent Polydimethylsiloxan.

12. Beschichtungszusammensetzung nach Anspruch 11, wobei die Zusammensetzung 1 Gewichtsprozent Chitosan, 0,2 Gewichtsprozent Essigsäure, Gewichtsprozent Dioctylnatriumsulfosuccinat, 0,0075 Gewichtsprozent Gibberellinsäure, 0,1 Gewichtsprozent Methylparaben und 0,01 Gewichtsprozent Polydimethylsiloxan umfaßt.

13. Verfahren zur Konservierung von Frischware, umfassend den Schritt, daß man die äußere Oberfläche der Ware mit der Beschichtungszusammensetzung umfassend eine wäßrige Lösung von 0,2 bis 3 Gewichtsprozent Chitosan oder modifiziertes Chitosan, 0,1 bis 1,0 Gewichtsprozent einer organischen Säure und 0,02 bis 0,1 Gewichtsprozent eines Tensids beschichtet.

14. Verfahren nach Anspruch 13, wobei die organische Säure aus der Reihe Essigsäure, Citronensäure, Milchsäure, Äpfelsäure, Propionsäure und Bernsteinsäure stammt.

15. Verfahren nach Anspruch 13, wobei das Tensid aus der Reihe Dioctylnatriumsulfosuccinat und Natriumlaurylsulfat stammt.

16. Verfahren nach Anspruch 13, wobei die Beschichtungszusammensetzung weiterhin 0,005 bis 0,1 Gewichtsprozent eines Pflanzenwachstumsregulators umfaßt.

17. Verfahren nach Anspruch 16, wobei der Pflanzenwachstumsregulator aus der Reihe Gibberellinsäure, Abscisinsäure, Auxin, Cytokinine, Polyamine, Ethephon und Jasmonat stammt.

18. Verfahren nach Anspruch 13, wobei die Beschichtungszusammensetzung weiterhin 0,05 bis 0,5 Gewichtsprozent eines antimikrobiellen Mittels umfaßt.

19. Verfahren nach Anspruch 18, wobei das antimikrobielle Mittel aus der Reihe Methylparaben, Ethylparaben, Propylparaben, Butylparaben, Natriumpropionat, Calciumpropionat, Benzoesäure, Natriumbenzoat, Kaliumsorbat und Natriumbisulfit stammt.

20. Verfahren nach Anspruch 13, wobei die Beschichtungszusammensetzung weiterhin 0,01 bis 0,05 Gewichtsprozent eines Schaumhemmers umfaßt.

21. Verfahren nach Anspruch 20, wobei der Schaumhemmer aus der Reihe Silikon- oder Nichtsilikon-Schaumhemmer stammt.

22. Verfahren nach Anspruch 21, wobei der Silikon-Schaumhemmer Polydimethylsiloxan ist.

23. Verfahren zur Konservierung von Frischware, wobei man die Außenfläche der Produkts mit - in Bezug auf das Gewicht - 0,2 bis 3 Prozent Chitosan, 0,1 bis 1,0 Prozent Essigsäure, 0,02 bis 0,1 Prozent Dioctylnatriumsulfosuccinat, 0,005 bis 0,01 Prozent Gibberellinsäure,- 0,05 bis 0,5 Prozent Methylparaben und 0,01 bis 0,05 Prozent Polydimethylsiloxan beschichtet.

24. Verfahren nach Anspruch 23, wobei die Beschichtungszusammensetzung 3 Gewichtsprozent Chitosan, 0,2 Gewichtsprozent Essigsäure, 0,06 Gewichtsprozent Dioctylnatriumsulfosuccinat, 0,0075 Gewichtsprozent Gibberellinsäure, 0,1 Gewichtsprozent Methylparaben und 0,01 Gewichtsprozent Polydimethylsiloxan umfaßt.

## Revendications

1. Composition d'enrobage pour des produits agricoles frais, comprenant une solution aqueuse de 0,2 à 3 pour cent en poids de chitosane ou de chitosane modifié, de 0,1 à 1,0 pour cent en poids d'un acide organique et de 0,02 à 0,1 pour cent en poids d'un tensioactif.

2. Composition d'enrobage selon la revendication 1, **caractérisée en ce que** l'acide organique est choisi dans le groupe constitué d'acide acétique, d'acide citrique, d'acide lactique, d'acide malique, d'acide propionique et d'acide succinique.

3. Composition d'enrobage selon la revendication 1, **caractérisée en ce que** le tensioactif est choisi dans le groupe constitué de sulfosuccinate de dioctylsodium et de laurylsulfate de sodium.

4. Composition d'enrobage selon la revendication 1, comprenant en outre de 0,05 à 0,5 pour cent en poids d'un agent antimicrobien.

5. Composition d'enrobage selon la revendication 4, **caractérisée en ce que** l'agent antimicrobien est choisi dans le groupe constitué de méthylparabène, d'éthylparabène, de propylparabène, de butylparabène, de propionate de sodium, de propionate de calcium, d'acide benzoïque, de benzoate de sodium, de sorbate de potassium et de bisulfite de sodium.

6. Composition d'enrobage selon la revendication 1, comprenant en outre de 0,01 à 0,05 pour cent en poids d'un agent antimousse.

7. Composition d'enrobage selon la revendication 6, **caractérisée en ce que** l'agent antimousse est choisi dans le groupe constitué d'agents antimousse siliconés ou non siliconés.

8. Composition d'enrobage selon la revendication 7, **caractérisée en ce que** l'agent antimousse siliconé est le polydiméthylsiloxane.

9. Composition d'enrobage selon la revendication 1, comprenant en outre de 0,005 à 0,01 pour cent en poids d'un régulateur de croissance des plantes.

10. Composition d'enrobage selon la revendication 9, **caractérisée en ce que** le régulateur de croissance des plantes est choisi dans le groupe constitué d'acide gibbérellique, d'acide abscisique, d'auxine, de cytokinines, de polyamines, d'éthéphon et de jasmonate.

11. Composition d'enrobage pour des produits agricoles frais, **caractérisée en ce qu'**elle comprend en poids de 0,2 à 3 pour cent de chitosane, de 0,1 à 1,0 pour cent d'acide acétique, de 0,02 à 0,1 pour cent de sulfosuccinate de dioctylsodium, de 0,005 à 0,01 pour cent d'acide gibbérellique, de 0,05 à 0,5 pour cent de méthylparabène et de 0,01 à 0,05 pour cent de polydiméthylsiloxane.

12. Composition d'enrobage selon la revendication 11, **caractérisée en ce que** la composition comprend 1 pour cent en poids de chitosane, 0,2 pour cent en poids d'acide acétique, pour cent en poids de sulfosuccinate de dioctylsodium, 0,0075 pour cent en poids d'acide gibbérellique, 0,1 pour cent en poids de méthylparabène et 0,01 pour cent en poids de polydiméthylsiloxane.

13. Procédé de conservation de produits agricoles frais, **caractérisé en ce qu'**il comprend l'étape d'enrobage de la surface extérieure du produit agricole avec la composition d'enrobage comprenant une solution aqueuse de 0,2 à 3 pour cent en poids de chitosane ou de chitosane modifié, de 0,1 à 1,0 pour cent en poids d'un acide organique et de 0,02 à 0,1 pour cent en poids d'un tensioactif.

14. Procédé selon la revendication 13, **caractérisé en ce que** l'acide organique est choisi dans le groupe constitué d'acide acétique, d'acide citrique, d'acide lactique, d'acide malique, d'acide propionique et d'acide succinique.

15. Procédé selon la revendication 13, **caractérisé en ce que** le tensioactif est choisi dans le groupe constitué de sulfosuccinate de dioctylsodium et de laurylsulfate de sodium.

16. Procédé selon la revendication 13, **caractérisé en ce que** la composition d'enrobage comprend en outre de 0,005 à 0,01 pour cent en poids d'un régulateur de croissance des plantes.

17. Procédé selon la revendication 16, **caractérisé en ce que** le régulateur de croissance des plantes est choisi dans le groupe constitué d'acide gibbérellique, d'acide abscisique, d'auxine, de cytokinines, de polyamines, d'éthéphon et de jasmonate.

18. Procédé selon la revendication 13, **caractérisé en ce que** la composition d'enrobage comprend en outre de 0,05 à 0,5 pour cent en poids d'un agent antimicrobien.

19. Procédé selon la revendication 18, **caractérisé en ce que** l'agent antimicrobien est choisi dans le groupe constitué de méthylparabène, d'éthylparabène, de propylparabène, de butylparabène, de propionate de sodium, de propionate de calcium, d'acide benzoïque, de benzoate de sodium, de sorbate de potassium et de bisulfite de sodium.

20. Procédé selon la revendication 13, **caractérisé en ce que** la composition d'enrobage comprend en outre de 0,01 à 0,05 pour cent en poids d'un agent antimousse.

21. Procédé selon la revendication 20, **caractérisé en ce que** l'agent antimousse est choisi dans le groupe constitué d'agents antimousse siliconés ou non siliconés.

22. Procédé selon la revendication 21, **caractérisé en ce que** l'agent antimousse siliconé est le polydiméthylsiloxane.

23. Procédé de conservation de produits agricoles frais, **caractérisé en ce qu'**il comprend l'étape d'enrobage de la surface extérieure des produits agricoles avec une composition comprenant en poids de 0,2 à 3 pour cent de chitosane, de 0, 1 à 1,0 pour cent d'acide acétique, de 0,02 à 0,1 pour cent de sulfosuccinate de dioctylsodium, de 0,005 à 0,01 pour cent d'acide gibbérellique, de 0,05 à 0,5 pour cent de méthylparabène et de 0,01 à 0,05 pour cent de polydiméthylsiloxane.

24. Procédé selon la revendication 23, **caractérisé en ce que** la composition d'enrobage comprend 3 pour cent en poids de chitosane, 0,2 pour cent en poids d'acide acétique, 0,06 pour cent en poids de sulfosuccinate de dioctylsodium, 0,0075 pour cent en poids d'acide gibbérellique, 0,1 pour cent en poids de méthylparabène et 0,01 pour cent en poids de polydiméthylsiloxane.
